# EUROPÄISCHE PATENTSCHRIFT

(11) **EP 2 701 956 B1**
(45) Veröffentlichungstag und Bekanntmachung des Hinweises auf die Patenterteilung: **10.06.2015**
(21) Anmeldenummer: 12730364.2
(22) Anmeldetag: 05.04.2012
(51) Int. Cl.: B60T 11/16, F15B 7/08, F16D 25/08

(54) **ANORDNUNG ZUR SCHMUTZSICHERUNG BEI EINEM ARBEITSZYLINDER**
ARRANGEMENT FOR SAFEGUARDING AGAINST DIRT IN A WORKING CYLINDER
SYSTÈME POUR LA PROTECTION CONTRE LES SALISSURES DANS UN CYLINDRE MOTEUR

(30) Priorität: 27.04.2011 DE 102011018829; 22.09.2011 DE 102011083188
(43) Veröffentlichungstag der Anmeldung: 05.03.2014
(73) Patentinhaber: Schaeffler Technologies AG & Co. KG, 91074 Herzogenaurach (DE)
(72) Erfinder: WAGNER, Philippe, F-67500 Haguenau (FR); WEY, Yannick, F-67800 Hoenheim (FR)
(86) Internationale Anmeldenummer: PCT/DE2012/000363
(87) Internationale Veröffentlichungsnummer: WO 2012/146227

(56) Entgegenhaltungen:
- DE-A1-102007 054 183
- DE-A1-102009 021 348
- DE-A1-102009 038 638

## Beschreibung

Die Erfindung betrifft eine Anordnung zur Schmutzsicherung bei einem Arbeitszylinder, insbesondere bei einem Geberzylinder, der mit einem Betätigungsgestänge eines Betätigungspedals eines Kraftfahrzeugs verbunden ist.

Es sind Geberzylinder eines Betätigungspedals bekannt, bei dem der kugelförmige Fuß der Kolbenstange an der Stirnseite eines Kolbens anliegt. Der Kolben wird im Inneren des Zylindergehäuses geführt und stützt sich über eine Feder an der Seite des Zylindergehäuses ab, die der Kolbenstange gegenüber liegt und an der das Zylindergehäuse geschlossen ist. An der offenen Seite des Zylindergehäuses ist ein Faltenbalg angeordnet. Der Faltenbalg ist schlauchförmig ausgebildet und nimmt die Kolbenstange in sich auf. Zur Abdichtung des Faltenbalgs gegenüber dem Zylindergehäuse ist an dem gehäuseseitigen Ende des Faltenbalgs eine Dichtungslippe vorgesehen, die in eine Ringnut eingreift, die an der Außenwand des Zylindergehäuses umlaufend angeordnet ist. An seinem gegenüberliegenden Ende weist der Faltenbalg eine weitere umlaufende Dichtlippe auf, die das Innere des Faltenbalgs gegenüber dem Kopf der Kolbenstange abdichtet. Aufgrund der flexiblen Form des Faltenbalgs kann die Kolbenstange in das Zylindergehäuse des Geberzylinders eingeführt werden. Aufgrund seiner flexiblen Form passt sich der Faltenbalg an die unterschiedliche Länge an, mit der die Kolbenstange jeweils aus dem Zylindergehäuse herausragt.

Es ist ferner ein Geberzylinder bekannt, bei dem am offenen Ende des Zylindergehäuses anstatt eines Faltenbalgs eine sogenannte Schmutzkappe vorgehen ist, die an ihrem dem Zylindergehäuse zugewandten Ende eine umlaufende Dichtlippe aufweist, die in eine Ringnut eingreift, die am Außenumfang des Zylindergehäuses umlaufend angeordnet ist. Zur Befestigung an der Stirnseite des Kolbens greift die Kolbenstange mit ihrem kugelförmigen Fuß durch eine zentrale Bohrung der Schmutzkappe hindurch. An der Innenkante der Bohrung ist eine umlaufende Dichtlippe vorgesehen, die die Kolbenstange gegenüber der Schmutzkappe abdichtet. Beim Ein- und Ausfahren der Kolbenstange in das Zylindergehäuse bzw. aus dem Zylindergehäuse heraus gleitet die Kolbenstange mit ihrer Außenseite an der umlaufenden Dichtlippe der Bohrung der Schmutzkappe entlang. Die Schmutzkappe besteht aus einem elastischen Material, sodass eine Schwenkbewegung der Kolbenstange möglich ist.

Ein weiterer bekannter Geberzylinder sieht einen Abstreifring vor, der auf der Kolbenstange hinter dem kugelförmigen Fuß derselben angeformt und mit einer Kolbenklammer des Kolbens verbunden ist. Bei der Bewegung der Kolbenstange innerhalb des Zylindergehäuses reibt der Abstreifring an der Innenwand des Zylindergehäuses.

Problematisch bei den bekannten Betätigungspedalen ist es jedoch, dass sich die Kolbenstange auf dem Transportweg aufgrund von Erschütterungen oder Vibrationen aus ihrer Verankerung innerhalb des Zylindergehäuses lösen kann. Ein weiterer Nachteil besteht darin, dass die aus dem Stand der Technik bekannten Anschlagringe ein Eindringen von Schmutzpartikeln und Feuchtigkeit in das Innere des Zylindergehäuses nicht wirksam verhindern. Die DE 10 2009 021 348 A1 offenbart eine Anordnung zur Transportsicherung eines Betätigungsgestänges eines Betätigungspedals in einem Kraftfahrzeug gemäß dem Oberbegriff des Patentanspruchs 1.

Es ist die Aufgabe der Erfindung einen Zylinder, insbesondere einen Geberzylinder für ein Betätigungspedal eines Kraftfahrzeugs bereitzustellen, der vor dem Eindringen von Schmutz und Feuchtigkeit in das Innere des Zylindergehäuses geschützt ist, wobei der Geberzylinder so ausgestaltet sein kann, dass seine Kolbenstange sich während des Transports nicht aus ihrer Verankerung am Kolben löst.

Diese Aufgabe wird gelöst durch eine Anordnung mit den Merkmalen des Anspruches 1. Die Erfindung basiert auf der Idee, zwischen dem Fuß der Kolbenstange und dem Kolben eine Drehsicherung vorzusehen, die bei einer radialen Drehung der Kolbenstange eine gleichgerichtete radiale Drehung des Kolbens innerhalb des Zylindergehäuses bewirkt. Darüber hinaus ist vorgesehen, dass zwischen dem Kolben und dem Anschlagring eine Verriegelung angeordnet ist, die die radiale Drehung des Kolbens begrenzt.

Im Inneren des Zylindergehäuses ist ein axial verschiebbarer Kolben vorgesehen, der auf seiner einen Seite von einer, im Zylindergehäuse gelagerten Feder druckbeaufschlagt wird. Die Druckbeaufschlagung kann z.B. auch hydraulisch erfolgen. Im Weiteren wird jedoch davon ausgegangen, dass sich im Inneren des Zylindergehäuses eine Feder am Gehäuseboden abstützt. Am offenen Ende des Zylindergehäuses ist ein Anschlagring vorgesehen, der das Zylindergehäuse verschließt. Der Anschlagring ist vorzugsweise in Form eines Schweißringes ausgebildet. Er greift axial in das Zylindergehäuse ein und ist mit diesem vorzugsweise verschweißt oder in anderer Weise kraftschlüssig verbunden. Alternativ kann der Anschlagring als Anschlagkappe ausgebildet und mithilfe von elastischen Schnappverbindungen formschlüssig mit dem Zylindergehäuse verbunden sein. Die Aufzählung ist in keiner Weise abschließend gemeint. Vielmehr kann der Anschlagring in unterschiedlicher Art und Weise kraftschlüssig, formschlüssig und stoffschlüssig mit dem offenen Ende des Zylindergehäuses verbunden sein. In entspanntem Zustand drückt die Feder den Kolben mit seiner Stirnseite gegen den Anschlagring. In dem Anschlag- bzw. Schweißring ist eine mittige Bohrung vorgesehen, durch die eine Kolbenstange in das Innere des Zylindergehäuses eingreift. Die Kolbenstange umfasst dabei an ihrer vom Zylindergehäuse abgewandten Seite einen Kopf, der mit einem Betätigungspedal in Verbindung steht. Bei einer Betätigung des Betätigungspedals wird die Kolbenstange im wesentlichen axial in das Zylindergehäuse hineingeschoben. An der gegenüberliegenden Seite des Kolbenkopfes ist ein Fuß der Kolbenstange vorgesehen, mit dem die in das Zylindergehäuse eingeführte Kolbenstange den Kolben an seiner Stirnseite beaufschlagt. Bei der Betätigung des Betätigungspedals wird die Kolbenstange gegen die Kraft der Feder in das Zylindergehäuse hineingeschoben. Bei einer Entlastung des Betätigungspedals entspannt sich die Feder und schiebt den Kolben im Inneren des Zylindergehäuses in seine Ausgangsstellung unterhalb des Anschlagrings zurück. Im Inneren des Zylindergehäuses sind Ringdichtungen vorgesehen, die den Bereich des Zylindergehäuses, der in Abhängigkeit von der Stellung des Betätigungspedals von der Feder vereinnahmt wird, gegenüber dem Bereich abdichten, in dem sich der Kolben bewegt. Die Ringdichtungen können bewegte Dichtungen sein, die umlaufend auf dem Außenumfang des Kolbens angeordnet sind. Alternativ ist auch wenigstens eine feststehende Dichtung verwendbar, die in einer, an der Innenwand des Zylindergehäuses umlaufenden Nut verankert ist. Die federseitige Dichtung ist als Druckdichtung ausgebildet und verhindert ein Entweichen des Drucks in den Bereich im Inneren des Zylindergehäuses, in dem sich der Kolben befindet. Zum Transport ist die Kolbenstange durch die Bohrung des Anschlagrings in das Zylindergehäuse eingeführt, wobei der Fuß der Kolbenstange den Kolben an seiner Stirnseite beaufschlagt. Die erfindungsgemäße Drehsicherung bewirkt, dass bei radialer Drehung der Kolbenstange der Fuß der Kolbenstange den Kolben mitnimmt und in eine gleichgerichtete radiale Drehung überführt. Erfindungsgemäß ist darüber hinaus zwischen dem Kolben und dem Anschlagring eine Verriegelung vorgesehen, die eine radiale Drehung des Kolbens begrenzt. Die Erfindung ermöglicht eine kostengünstige Transportsicherung für einen Geberzylinder, die die Kolbenstange in ihrem Sitz am Kolben verliersicher vor Verdrehung gegenüber dem Kolben schützt und die gleichzeitig eine Verriegelung vorsieht, die eine radiale Drehung der Einheit aus Kolben und Kolbenstange in begrenztem Umfang ermöglicht. Die Erfindung erweist sich überdies als vorteilhaft, da eine beschädigte Kolbenstange konstruktiv einfach ausgebaut und ersetzt werden kann.

Vorzugsweise ist an der Kolbenstange und an ihrem kugelförmigen Fuß an achsparallel gegenüberliegenden Seiten je eine Abflachung vorgesehen, die mit Abflachungen in der Bohrung des Anschlagrings und einer, den Fuß der Kolbenstange aufnehmenden Vertiefung im Kolben kongruieren. Die Abflachungen erleichtern zudem die Montage, da die Kolbenstange nur in der Position in das Zylindergehäuse einführbar ist, in der die Abflachungen miteinander kongruieren. Die Abflachungen sind dabei bogenförmig oder geradlinig ausgebildet.

Weiterhin kann es sich als vorteilhaft erweisen, dass der Fuß der Kolbenstange im Bereich zwischen den Abflachungen wulstförmig ausgebildet ist. Die achsparallelen Abflachungen sind um radial 180° voneinander angeordnet. Die wulstförmige Ausbildung des Fußes der Kolbenstange zwischen den Abflachungen verhindert ein unbeabsichtigtes Herausrutschen der Kolbenstange nach radialer Verdrehung des in das Zylindergehäuse eingeführten Fußes der Kolbenstange. Der Wulst kann eine abgerundete oder eine mehreckige Form aufweisen.

In einer anderen vorteilhaften Ausführungsform der Erfindung sind an der gegen den Kolben gerichteten Stirnseite des Anschlagrings mehrere, in radialem Abstand voneinander angeordnete axiale Bewegungsbegrenzer positioniert und an dem Kolben axial gerichtete Nasen angeordnet, die dem Eingriff zwischen je zwei Bewegungsbegrenzern dienen. Die axialen Bewegungsbegrenzer können in unterschiedlicher Länge und in unterschiedlichen Abstand zueinander gegen den Kolben gerichtet sein. Mithilfe der Ausführungsform kann der Anschlagring den gewünschten radialen Verdrehwinkel der Einheit aus Kolbenstange und Kolben herstellen.

Eine weitere vorteilhafte Ausführungsform der Erfindung sieht vor, dass an dem Kolben zwei Nasen in einem Abstand von 180° angeordnet sind. Zusätzlich kann vorgesehen sein, dass der Kolben durch die Kolbenstange um etwa 90° und nach dem axialen Eingriff der Nasen zwischen die Anschläge um 45° radial drehbar ist. Die Grad-Angaben sind in keiner Weise ausschließlich und begrenzend gemeint. Bedarfsgemäß können auch abweichende Winkelgrade erreicht werden.

Vorzugsweise ist an der vom Kolben abgewandten Stirnseite des Anschlagrings ein an der Kolbenstange dichtend anliegender Abstreifring angeordnet. Der Abstreifring kann aus einem flexiblen Material, zum Beispiel Gummi hergestellt sein und je nach Durchmesser der Kolbenstange eine unterschiedliche Materialstärke aufweisen. Der Abstreifring ist an dem Schweißring oder an der Anschlagkappe angeordnet, je nachdem, in welcher Form er ausgebildet ist.

Bei geringerem Bauraum als bei einer Schmutzkappe verhindert der Abstreifring, dass Schmutzpartikel oder Feuchtigkeit in das Innere des Geberzylinders eindringen, da die auf der Kolbenstange anhaftenden Partikel beim Eindringen der Kolbenstange in das Zylindergehäuse durch den Abstreifring am Außenumfang der Kolbenstange außerhalb des Geberzylinders nach oben geschoben werden. Es wird darauf hingewiesen, dass sich die Anordnung des Abstreifrings nicht auf die Ausführungsform des Geberzylinders mit der Verdrehsicherung beschränkt. Vielmehr kann der Abstreifring bei allen möglichen Geberzylindern an Schweißringen oder Abdeckringen vorgesehen sein.

Zu diesem Zweck sieht eine andere vorteilhafte Ausführungsform der Erfindung vor, dass die Befestigung des Abstreifrings ein, einer Schwenkbewegung der Kolbenstange folgendes radiales Spiel aufweist. Es ist vorstellbar, dass ein Fahrzeuglenker das Betätigungspedal mit seinem Fuß in einer Weise tritt, dass die Kolbenstange mit radialem Versatz in das Zylindergehäuse eingeführt wird. Das genannte radiale Spiel gewährleistet, dass der Abstreifring in seiner Befestigung der Versatzbewegung folgen kann. Ein bewegungsbedingtes Einreißen des Abstreifrings in Richtung des radialen Versatzes unterbleibt.

Weiterhin kann vorgesehen sein, dass der Abstreifring durch mindestens zwei, ihn axial durchsetzende Clipteile auf dem Anschlagring befestigt ist. Die Clipteile sind radial außerhalb der mittigen Bohrung angeordnet und umfassen einen Schaft, auf dem der Abstreifring befestigt ist sowie einen Kopf, dessen Querschnitt den Querschnitt des Schaftes übersteigt.

In einer weiteren vorteilhaften Ausführungsform der Erfindung ist der Durchmesser einer von einem Clipteil durchsetzten Bohrung des Abstreifrings größer als der Durchmesser des Schaftes. Der Durchmesser des Kopfes des Clipteiles übersteigt zusätzlich den Durchmesser der zugehörigen Bohrung des Abstreifringes, so dass der Abstreifring im verbauten Zustand durch den Kopf des Clipteiles in seiner Position am Anschlagring gehalten wird.

Alternativ ist es auch denkbar, dass der Abstreifring axial fest und radial mit Spiel auf dem Clipteil gelagert ist. Die vorliegende Ausführungsform der Erfindung erweist sich deshalb als vorteilhaft, da der Abstreifring dem radialen Versatz der Kolbenstange folgen kann, ohne dass der Abstreifring in seiner Halterung an den Clipteilen verletzt wird.

Weitere Ausführungsbeispiele der Erfindung sind in der Zeichnung dargestellt. Hierbei zeigen
- Figur 1: den Längsschnitt durch einen Geberzylinder,
- Figur 2: in perspektivischer Darstellung den vorliegenden Geberzylinder der Figur 1,
- Figur 3: den Anschlagring des vorliegenden Geberzylinders,
- Figur 4: den Kolben des erfindungsgemäßen Geberzylinders im Schnitt,
- Figur 5: in unterschiedlich verdrehten Positionen je einen Anschlagring mit Kolbenstange,
- Figur 6: den Anschlagring mit Drehsicherung im Schnitt,
- Figur 7: den Anschlagring mit Drehsicherung in Draufsicht und
- Figur 8: die Vertiefung im Kolben.

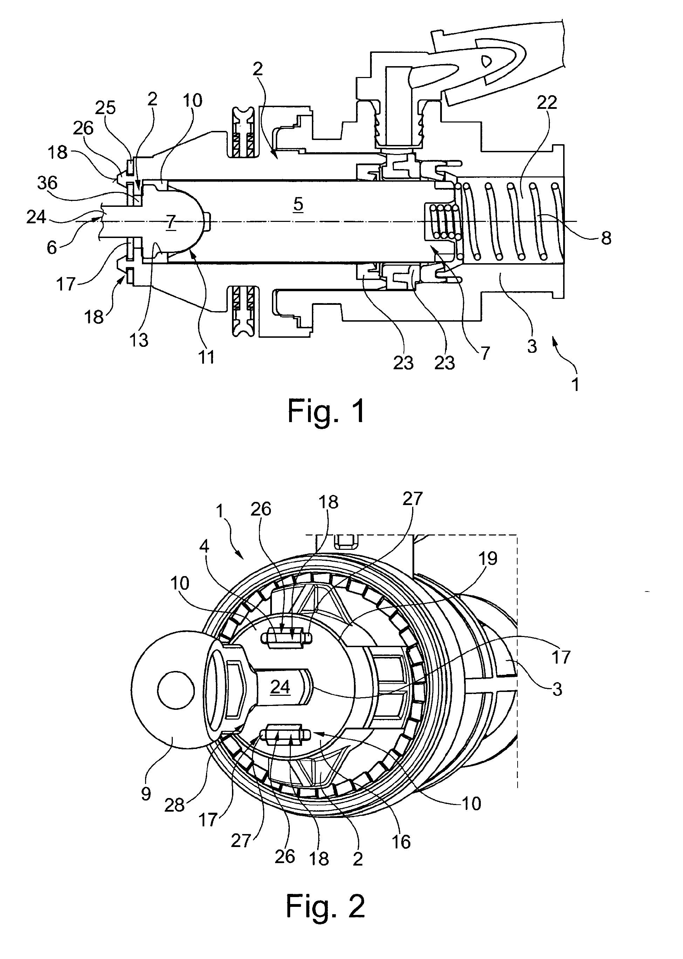

Figur 1 zeigt den Längsschnitt durch einen Geberzylinder 1, der mit einem nicht dargestellten Betätigungspedals eines Kraftfahrzeugs in Verbindung steht. Der Geberzylinder 1 umfasst ein Zylindergehäuse 3, in das eine axiale Bohrung 22 eingebracht ist. In der Bohrung 22 ist ein Kolben 5 angeordnet, der über Dichtungsringe 23, 23 gegenüber der Bohrung 22 des Zylindergehäuses 3 abgedichtet ist. Der Kolben 5 liegt mit seiner einen Seite an einer Feder 8 an, die sich an der Gehäusewand des Zylindergehäuses 3 abstützt. An der anderen, der Feder 8 abgewandten Seite weist der Kolben 5 eine vorzugsweise kugelförmige Vertiefung 11 auf, die der Aufnahme eines kugelförmigen Fußes 7 einer Kolbenstange 6 dient.

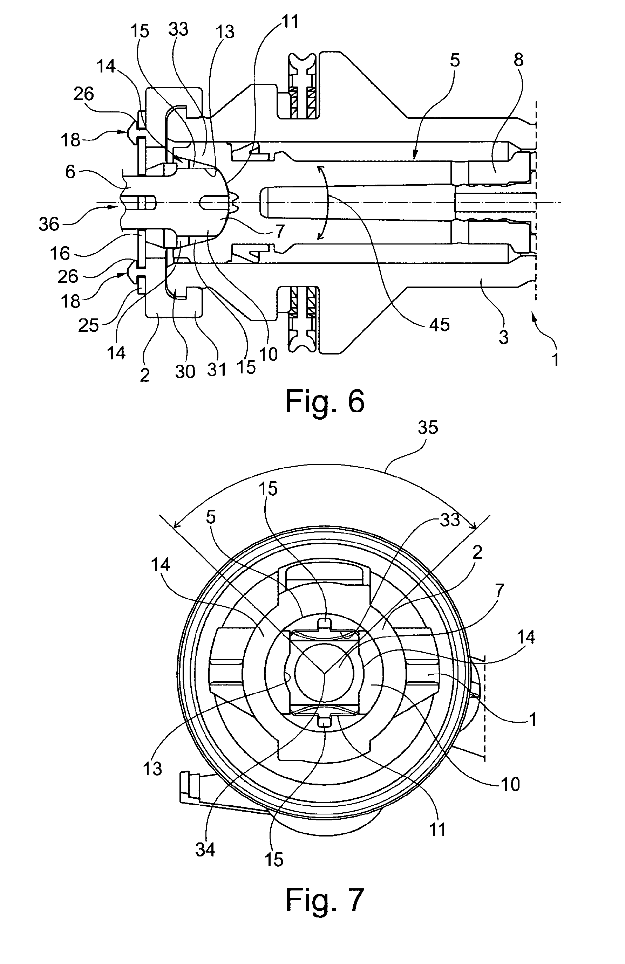

Der Fuß 7 liegt mit seinem Außenumfang am Innenumfang der Vertiefung 11 an. Die Kolbenstange 6 weist einen Querschnitt auf, der jeweils kleiner ist als der Querschnitt des Fußes 7 bzw. der Querschnitt des Kopfes 9 (Figur 2) der Kolbenstange 6. Bei entspannter Feder 8 ragt die Kolbenstange 6 zu etwa 2/3 über das offene Ende des Zylindergehäuses 3 hinaus. Ein Anschlagring 2 verschließt das offene Ende des Zylindergehäuses 3. Die Kolbenstange 6 ragt durch eine mittige Bohrung 36 des Anschlagrings 2 in das Zylindergehäuse 3 hinein Die Fig. 1 zeigt die Kolbenstange 6 bei unbelastetem Betätigungspedal. Die entlastete Feder 8 beaufschlagt den Kolben 5, der den Fuß 7 der Kolbenstange 6 an die dem Kolben 5 zugewandte Unterseite des Anschlagrings 2 drückt. Bei einer Betätigung des nicht gezeigten Betätigungspedals wird die Kolbenstange 6 mit ihrem Hals 24 durch die mittige Bohrung 36 des Anschlagrings 2 in das Innere des Zylindergehäuses 3 verschoben. Der Fuß 7 der Kolbenstange 6 liegt mit seinen Abflachungen 10 an Abflachungen 13 der Vertiefung 11 des Kolbens 5 (Figur 6) an. Bei einer Betätigung bzw. Entlastung des Betätigungspedals verschiebt die Kolbenstange 6 den Kolben 5 gegen die Kraft der Feder 8 bzw. schiebt die Feder 8 den Kolben 5 innerhalb des Zylindergehäuses 3 in seine Ausgangsstellung im Bereich des Anschlagrings 2. In verbautem Zustand wird die Kolbenstange 6 in der mittigen Bohrung 36 des Anschlagrings 2 geführt. An der vom Kolben 5 abgewandten Stirnseite des Anschlagrings 2 ragen vorteilhafter Weise zwei Clipteile 18 axial ab, die der Halterung eines Abstreifrings 16 dienen. Die Clipteile 18 sind mittig eingeschnürt und verfügen über einen, ihren Schaft 25 übergreifenden Kopf 26, der ein Abrutschen des Abstreifrings 16 vom Clipteil 18 verhindert.

Die Figur 2 zeigt in perspektivischer Darstellung das offene Ende des Geberzylinders 1, das mit dem Anschlagring 2 verschlossen ist. An der Stirnseite des Anschlagrings 2 sind die Clipteile 18 erkennbar, auf die der Abstreifring 16 verliersicher aufgesetzt ist. Zur flächigen Befestigung des Abstreifrings 16 am Anschlagring 2 sind im Abstreifring 16 radial außerhalb der mittigen Bohrung 19 zwei Bohrungen 27 vorgesehen, durch die je einen Clipteil 18 hindurch verläuft. Der Durchmesser der Bohrung 27 ist kleiner als der Durchmesser des Kopfes 26 des Clipsteil 18. Zur Verliersicherung übergreift jeweils der Kopf 26 des Clipteils 18 den Abstreifring 16 im Bereich der Bohrungen 27.

Über seine gesamte Länge weist der Hals 24 der Kolbenstange 6 je zwei axial verlaufende Abflachungen 10 auf, die einander achsparallel gegenüberliegen. Im Zentrum des Abstreifrings 16 ist eine mittige Bohrung 19 vorgesehen, deren Außenkontur mit der Kontur des Außenumfangs des Halses 24 kommuniziert. Aufgrund eines Spiels 17 das die Bohrung 27 des Abstreifrings 16 gegenüber dem Schaft 25 des Clipsteils 18 aufweist, kann der Abstreifring 16 einer radialen Bewegung (Pfeil 4) der Kolbenstange 6 gegenüber dem Anschlagring 2 folgen. Der Kopf 9 der Kolbenstange 6 stößt beim Einfahren in das Zylindergehäuse 3 mit seiner Unterkante 28 an den Abstreifring 16 und verhindert somit eine weitere Bewegung der Kolbenstange 6 in den Geberzylinder 1 hinein.

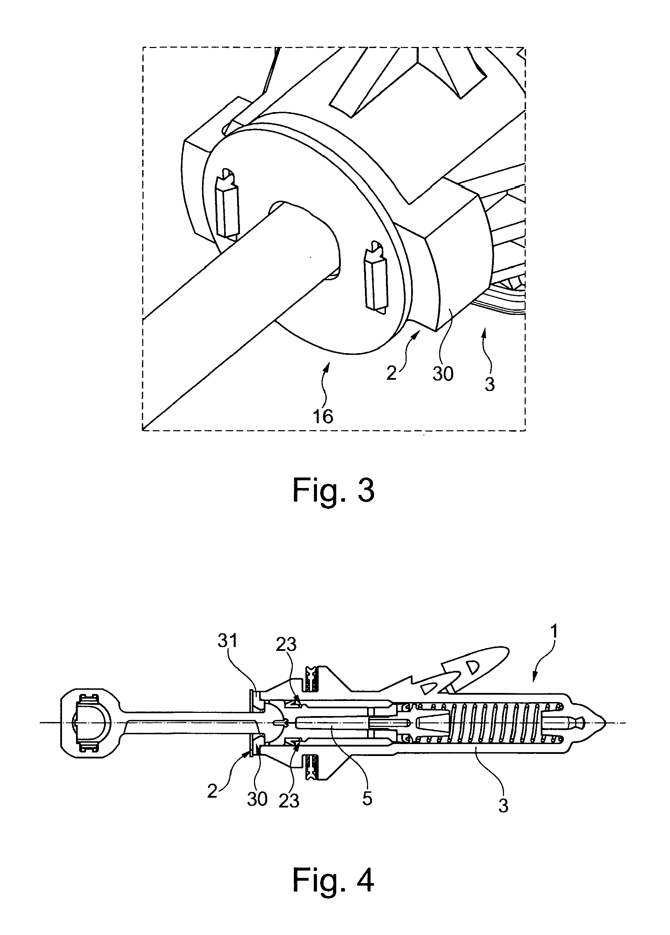

Figur 3 zeigt eine alternative Ausführungsform der Erfindung, bei der der Anschlagring 2 anstatt in Form eines Schweißrings als Schnappverschluss 30 ausgebildet ist. Der Anschlagring 2 wird dabei mit Hilfe nicht gezeigter Schnapphaken 31 im offenen Ende des Zylindergehäuses 3 befestigt. Die Befestigung des Abstreifrings 16 am Anschlagring 2 erfolgt in vergleichbarer Weise wie in den vorangegangenen Figuren 1 und 2.

Figur 4 zeigt ein Zylindergehäuse 3 mit innen liegendem Kolben 5, der über eine laufende Ringdichtung 23, die am Kolben 5 befestigt ist, gegen das Zylindergehäuse 3 abgedichtet ist. Am offenen Ende des Zylindergehäuses 3 ist ein Anschlagring 2 mit Schnappverschluss 30 dargestellt, der mit seinen Schnapphaken 31 im Inneren des Geberzylinders 1 am Zylindergehäuse 3 angreift.

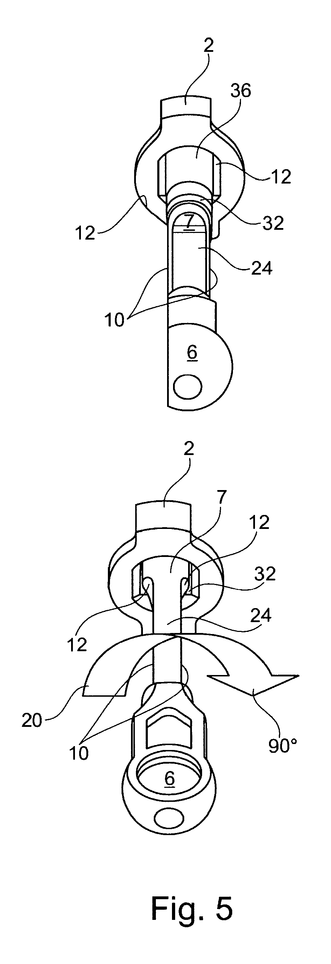

Die Figur 5 zeigt in zwei voneinander getrennten Darstellungen jeweils einen Anschlagring 2 mit je einer mittigen Bohrung 36, deren Außenkontur die Abflachungen 12 aufweist. Die Abflachungen 12 kommunizieren mit den weiteren Abflachungen 10, die am Hals 24 und am Fuß 7 der Kolbenstange 6 angebracht sind. Ist die Kolbenstange 6 so positioniert, dass je eine Abflachung 10 des Kolbenhalses 24 je einer Abflachung 12 der mittigen Bohrung 36 gegenübersteht, ist die Kolbenstange 6 in das Zylindergehäuse 3 einführbar. An dem, dem Kolben 5 abgewandten Rand des Fußes 7 der Kolbenstange 6 sind Anschläge 32 vorgesehen. Bei einer Verdrehung der in das Zylindergehäuse 3 eingeführten Kolbenstange 6 um etwa 90 ° (Pfeil 20) untergreifen die Anschläge 32 des Fußes 7 den Anschlagring 2 im Bereich der Abflachungen 12 der mittigen Bohrung 36. Nach Ausführung der 90 °-Drehung der Kolbenstange 6 stehen die Abflachungen 10 des Halses 24 und des Fußes 7 der Kolbenstange 6 etwa in einem Winkel von 90° zu den Abflachungen 12 der mittigen Bohrung 36 des Anschlagrings 2. Da die Anschläge 32 nunmehr die Abflachung 12 der mittigen Bohrung 36 des Anschlagrings 2 hintergreifen, ist ein axiales Herausziehen der Kolbenstange 6 in dieser Position nicht mehr möglich.

Die Figur 6 zeigt im Schnitt das kolbenförmige Ende des Zylindergehäuses 3 des Geberzylinders 1 mit einem Anschlagring 2 mit Schnappverschluss 30, dessen Schnapphaken 31 das offene Ende des Zylindergehäuses 3 zur Befestigung am Geberzylinder 1 außenwandig übergreifen. An der Stirnseite des Anschlagrings 2 sind koaxiale Clipteile 18 vorgesehen, auf die der Abstreifring 16 aufgesteckt ist. Die Köpfe 26 übergreifen mit ihren Rändern den Abstreifring 16 im Bereich des Schaftes 25 und halten den Abstreifring 16 verliersicher an der Stirnseite des Anschlagrings 2.

An der Stirnseite des Kolbens 5 sind beidseitig der Vertiefung 11 der Drehsicherung zwischen Kolbenstange 6 und Kolben 5 dienende Nasen 15 angeordnet. Die Nasen 15 erstrecken sich koaxial zum Kolben 5 und ragen - aus Richtung des Zylindergehäuses 3 gesehen - von unten in den Anschlagring 2 hinein. In der Vertiefung 11 des Kolbens 5 sind im Bereich der Nasen 15 Randverbreiterungen 33 vorgesehen, auf denen die Nasen 15 angebracht sind. In verbautem Zustand greift der Fuß 7 der Kolbenstange 6 in die Vertiefung 11 des Kolbens 5. Die Vertiefung 11 weist im Bereich der Randverbreiterungen 33 die Abflachungen 13 auf, die mit den Abflachungen 10 des Fußes 7 kommunizieren. Mit Drehung der Kolbenstange 6 nimmt der Fuß 7 der Kolbenstange 6 den Kolben 5 mit und überführt den Kolben 5 in eine gleichgerichtete axiale Drehung. Radial innerhalb der Clip- teile 18 des Anschlagrings 2 sind radial außerhalb der mittigen Bohrung 36 am Anschlagring 2 Bewegungsbegrenzer 14 vorgesehen. Die Bewegungsbegrenzer 14 ermöglichen eine Verriegelung des Kolbens 5 gegenüber dem Anschlagring 2 im für den Transport zusammengebauten Zustand und begrenzen die radiale Drehung des Kolbens 5 gegenüber dem Anschlagring 2. Die Bewegungsbegrenzer 14 ragen bei entspannter Feder 8 in das Innere des Zylindergehäuses 3 in den Bewegungsbereich der Nasen 15 hinein. Die beiden Bewegungsbegrenzer 14 sind einander gegenüberliegend am Anschlagring 2 angeordnet. Nach Ausführung der 90° Drehung des Kolbens 5 innerhalb des Zylindergehäuses 3 drückt die Feder 8 den Kolben 5 gegen den Anschlagring 2, so dass jede Nase 15 zwischen je zwei Bewegungsbegrenzern 14 positioniert ist. Bei Drehung der im Kolben 5 verriegelten Kolbenstange 6 steht jeder der einander gegenüberliegend angeordneten Nasen 15 zwischen den einander gegenüber positionierten Bewegungsbegrenzern 14 jeweils ein Verdrehwinkel 35 (Figur 7) von etwa 45° zur Verfügung.

Im Zentrum des Zylindergehäuses 3 ist in der aus der Figur 7 ersichtlichen Weise der Fuß 7 der Kolbenstange 6 erkennbar. Die Abflachungen 10 des Fußes 7 kommunizieren mit den Abflachungen 13 der Vertiefung 11 im Bereich der Randverbreiterungen 33. Koaxial zur Kolbenstange 6 ragen die beiden Nasen 15 im Bereich der Randverbreiterungen 33 seitlich der Vertiefung 11 vom Kolben 5 ab. Die nicht gezeigte Feder 8 drückt den Kolben 5 gegen den Anschlagring 2. Die Nasen 15 greifen zwischen die Bewegungsbegrenzer 14 und stoßen bei einer Drehung der Einheit aus Kolben 5 und der Kolbenstange 6 in beiden Richtungen um die Drehachse 34 gegen die Bewegungsbegrenzer 14. Zur Demontage des Geberzylinders 1 werden die Nasen 15 durch axialen Druck auf den Kolben 5 gegen die Feder 8 in das Innere des Zylindergehäuses 3 unter die Ebene der Bewegungsbegrenzer 14 des Anschlagrings 2 gedrückt. In dieser Position ist eine Verdrehung des Kolbens 5 um seine Drehachse 35 nach beiden Seiten um ein Winkelmaß möglich, das 45 Grad übersteigt.

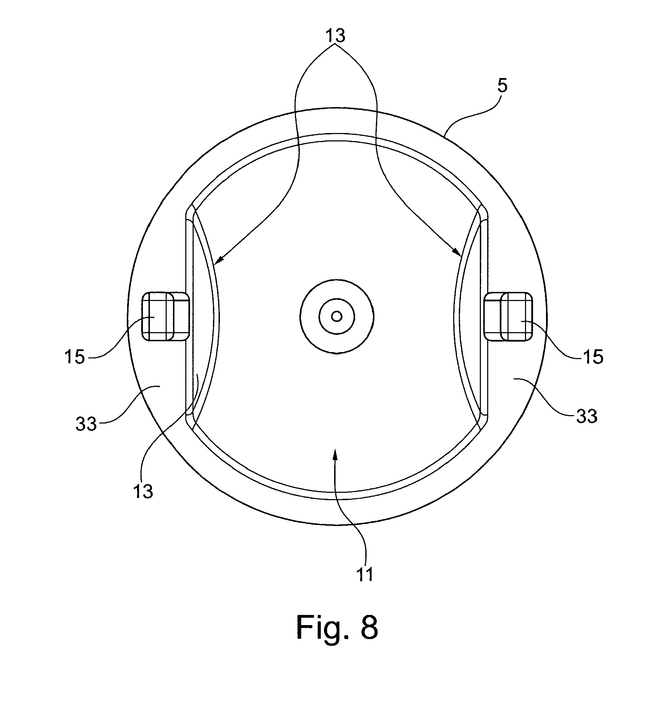

Die Figur 8 zeigt in Draufsicht die Vertiefung 11 des Kolbens 5. Im Bereich der Nasen 15 weist die Vertiefung 11 die Randverbreiterungen 33 auf, die über Abflachungen 13 im verbauten Zustand (nicht dargestellt) mit den Abflachungen 10 des Fußes 7 kommunizieren.

### Bezugszeichenliste

- 1: Geberzylinder
- 2: Anschlagring
- 3: Zylindergehäuse
- 4: Pfeil
- 5: Kolben
- 6: Kolbenstange
- 7: Fuß
- 8: Feder
- 9: Kopf
- 10: Abflachung
- 11: Vertiefung
- 12: Abflachung
- 13: Abflachung
- 14: Bewegungsbegrenzer
- 15: Nase
- 16: Abstreifring
- 17: Spiel
- 18: Clipteil
- 19: Bohrung
- 20: Pfeil
- 22: Bohrung
- 23: Dichtungsring
- 24: Hals
- 25: Schaft
- 26: Kopf
- 27: Bohrung
- 28: Unterkante
- 29: Schweißring
- 30: Schnappverschluss
- 31: Schnapphaken
- 32: Anschlag
- 33: Randverbreiterung
- 34: Drehachse
- 35: Verdrehwinkel
- 36: Bohrung

## Patentansprüche

1. Anordnung zur Transportsicherung eines Betätigungsgestänges eines Betätigungspedals in einem Kraftfahrzeug, umfassend
- einen Geberzylinder (1), an dessen einem Ende ein Anschlagring (2) für einen, im Zylindergehäuse (3) unter dem Druck einer Feder (8) stehenden Kolben (5) angeordnet ist und
- eine im wesentlichen axial betätigte Kolbenstange (6), deren kugelförmigen Fuß (7) eine mittige Bohrung (36) des Anschlagrings (2) durchgreift und den Kolbenkopf beaufschlagt,
- und eine zwischen dem Kolben (5) und dem Anschlagring (2) angeordnete, die radiale Drehung des Kolbens (5) begrenzende Verriegelung, **dadurch gekennzeichnet, dass** zwischen dem Fuß (7) der Kolbenstange (6) und dem Kolben (5) eine Drehsicherung zur gemeinsamen radialen Drehung angeordnet ist.

2. Anordnung nach Anspruch 1, **dadurch gekennzeichnet, dass** die Kolbenstange (6) mit ihrem Fuß (7) an achsparallel gegenüberliegenden Seiten je eine Abflachung (10) aufweist und die Bohrung (36) des Anschlagrings (2) und eine, den Fuß (7) der Kolbenstange (6) aufnehmende Vertiefung (11) im Kolben (5) ebenfalls kongruente Abflachungen (12; 13) aufweisen.

3. Anordnung nach Anspruch 1 oder 2, **dadurch gekennzeichnet, dass** der Fuß (7) der Kolbenstange (6) im Bereich zwischen den Abflachungen (10) wulstförmig ausgebildet ist.

4. Anordnung nach einem der Ansprüche 1 bis 3, **dadurch gekennzeichnet, dass** an der gegen den Kolben (5) gerichteten Stirnseite des Anschlagrings (2) mehrere in radialem Abstand voneinander angeordnete axiale Bewegungsbegrenzer (14) positioniert sind und an dem Kolben (5) axial gerichtete Nasen (15) angeordnet sind, die dem Eingriff zwischen je zwei Bewegungsbegrenzern (14) dienen.

5. Anordnung nach Anspruch 4, **dadurch gekennzeichnet, dass** an dem Kolben (5) zwei Nasen (15) in einem Abstand von 180° angeordnet sind.

6. Anordnung nach Anspruch 4 oder 5, **dadurch gekennzeichnet, dass** der Kolben (5) durch die Kolbenstange (6) um etwa 90° und nachdem axialen Eingriff der Nasen (15) zwischen die Bewegungsbegrenzer (14) um etwa 45° radial drehbar ist.

7. Anordnung nach einem der Ansprüche 1 bis 6, **dadurch gekennzeichnet, dass** an der vom Kolben (5) abgewandten Stirnseite des Anschlagrings (2) ein an der Kolbenstange (6) anliegender Abstreifring (16) angeordnet ist.

8. Anordnung nach Anspruch 7, **dadurch gekennzeichnet, dass** die Befestigung des Abstreifrings (16) ein, einer Schwenkbewegung der Kolbenstange (6) folgendes radiales Spiel (17) aufweist.

9. Anordnung nach einem der Ansprüche 7 oder 8, **dadurch gekennzeichnet, dass** der Abstreifring (16) durch mindestens zwei, ihn axial durchsetzende Clipteile (18) auf dem Anschlagring (2) befestigt ist.

10. Anordnung nach Anspruch 9, **dadurch gekennzeichnet, dass** der Durchmesser einer von einem Clipteil (18) durchsetzten Bohrung (19) des Abstreifrings (16) größer ist, als der Durchmesser des Schaftes (25) des Clipteiles (18).

11. Anordnung nach Anspruch 9 oder 10, **dadurch gekennzeichnet, dass** der Abstreifring (16) axial fest und radial mit Spiel (17) auf den Clipteilen (18) gelagert ist.

## Claims

1. Arrangement for transport protection of an actuating linkage of an actuating pedal in a motor vehicle, comprising
- a master cylinder (1), at one end of which is arranged a stop ring (2) for a piston (5) standing under the pressure of a spring (8) in the cylinder housing (3), and
- an essentially axially actuated piston rod (6), the spherical foot (7) of which passes through a central bore (36) of the stop ring (2) and acts upon the piston head,
- and a lock limiting the radial rotation of the piston (5) is arranged between the piston (5) and the stop ring (2),
**characterized in that** a rotational securing means for the purpose of common radial rotation is arranged between the foot (7) of the piston rod (6) and the piston (5).

2. Arrangement according to Claim 1, **characterized in that** the piston rod (6) has with its foot (7), on sides lying axially parallel opposite one another, in each case a flattening (10), and the bore (36) of the stop ring (2) and a depression (11), receiving the foot (7) of the piston rod (6), in the piston (5) likewise have congruent flattenings (12; 13).

3. Arrangement according to Claim 1 or 2, **characterized in that** the foot (7) of the piston rod (6) is of bead-shaped form in the region between the flattenings (10).

4. Arrangement according to one of Claims 1 to 3, **characterized in that**, on that end face of the stop ring (2) which is directed towards the piston (5), a plurality of axial movement limiters (14) which are arranged at a radial distance from one another are positioned, and axially directed noses (15) which serve for engagement in each case between two movement limiters (14) are arranged on the piston (5).

5. Arrangement according to Claim 4, **characterized in that** two noses (15) are arranged at a mutual distance of 180° on the piston (5).

6. Arrangement according to Claim 4 or 5, **characterized in that** the piston (5) is rotatable radially over about 90° by the piston rod (6) and over about 45° after the axial engagement of the noses (15) between the movement limiters (14).

7. Arrangement according to one of Claims 1 to 6, **characterized in that** a stripper ring (16) bearing against the piston rod (6) is arranged on that end face of the stop ring (2) which faces away from the piston (5).

8. Arrangement according to Claim 7, **characterized in that** the fastening of the stripper ring (16) has radial play (17) which follows a pivoting movement of the piston rod (6).

9. Arrangement according to either one of Claims 7 and 8, **characterized in that** the stripper ring (16) is fastened by means of at least two clip parts (18) passing axially through it to the stop ring (2).

10. Arrangement according to Claim 9, **characterized in that** the diameter of a bore (19) of the stripper ring (16), through which bore a clip part (18) passes, is larger than the diameter of the shank (25) of the clip part (18).

11. Arrangement according to Claim 9 or, **characterized in that** the stripper ring (16) is mounted on the clip parts (18) axially in a fixed manner and radially with play (17).

## Revendications

1. Agencement pour la protection lors du transport d'une tringlerie d'actionnement d'une pédale d'actionnement dans un véhicule automobile, comprenant :
- un maître-cylindre (1) à l'extrémité duquel est disposée une bague de butée (2) pour un piston (5) soumis à la pression d'un ressort (8) dans le boîtier de cylindre (3) et
- une tige de piston (6) actionnée essentiellement axialement, dont la base de forme sphérique (7) vient en prise à travers un alésage central (36) de la bague de butée (2) et sollicite la tête de piston,
- et un verrouillage disposé entre le piston (5) et la bague de butée (2) qui limite la rotation radiale du piston (5),
**caractérisé en ce qu'**entre la base (7) de la tige de piston (6) et le piston (5) est disposée une fixation en rotation pour une rotation radiale commune.

2. Agencement selon la revendication 1, **caractérisé en ce que** la tige de piston (6) avec sa base (7) présente, au niveau de côtés opposés d'axes parallèles, un méplat respectif (10) et l'alésage (36) de la bague de butée (2) et un renfoncement (11) dans le piston (5), recevant la base (7) de la tige de piston (6), présentent également des méplats coïncidents (12 ; 13).

3. Agencement selon la revendication 1 ou 2, **caractérisé en ce que** la base (7) de la tige de piston (6) est réalisée en forme de bourrelet dans la région entre les méplats (10).

4. Agencement selon l'une quelconque des revendications 1 à 3, **caractérisé en ce que** plusieurs limiteurs de mouvement axiaux (14) disposés à distance radiale les uns des autres sont positionnés au niveau du côté frontal de la bague de butée (2) orienté vers le piston (5) et des ergots orientés axialement (15) sont disposés au niveau du piston (5), lesquels servent à l'engagement entre deux limiteurs de mouvement respectifs (14).

5. Agencement selon la revendication 4, **caractérisé en ce que** deux ergots (15) sont disposés sur le piston (5) à une distance de 180° l'un de l'autre.

6. Agencement selon la revendication 4 ou 5, **caractérisé en ce que** le piston (5) peut tourner radialement par le biais de la tige de piston (6) d'environ 90° et d'environ 45° après l'engagement axial des ergots (15) entre les limiteurs de mouvement (14).

7. Agencement selon l'une quelconque des revendications 1 à 6, **caractérisé en ce qu'**une bague de raclage (16) s'appliquant contre la tige de piston (6) est disposée au niveau du côté frontal de la bague de butée (2) opposé au piston (5).

8. Agencement selon la revendication 7, **caractérisé en ce que** la fixation de la bague de raclage (16) présente un jeu radial (17) suivant un mouvement de pivotement de la tige de piston (6).

9. Agencement selon l'une quelconque des revendications 7 ou 8, **caractérisé en ce que** la bague de raclage (16) est fixée sur la bague de butée (2) par au moins deux parties de clip (18) qui la traversent axialement.

10. Agencement selon la revendication 9, **caractérisé en ce que** le diamètre d'un alésage (19) de la bague de raclage (16) traversé par une partie de clip (18) est supérieur au diamètre de la tige (25) de la partie de clip (18).

11. Agencement selon la revendication 9 ou 10, **caractérisé en ce que** la bague de raclage (16) est supportée axialement fixement et radialement avec un jeu (17) sur les parties de clip (18).
